Europäisches Patentamt

European Patent Office

Office européen des brevets

(11) Veröffentlichungsnummer: **0 303 916**
**A2**

# (12) EUROPÄISCHE PATENTANMELDUNG

(21) Anmeldenummer: **88112808.6**

(22) Anmeldetag: **05.08.88**

(51) Int. Cl.⁴: **G06F 11/18 , G06F 1/04**

(30) Priorität: **18.08.87 US 86428**

(43) Veröffentlichungstag der Anmeldung:
**22.02.89 Patentblatt 89/08**

(84) Benannte Vertragsstaaten:
**CH DE ES FR GB IT LI**

(71) Anmelder: **Siemens Aktiengesellschaft Berlin
und München**
**Wittelsbacherplatz 2**
**D-8000 München 2(DE)**

(72) Erfinder: **Hofmann, Hermann**
**Paul-Gossen-Strasse 119**
**D-8520 Erlangen(DE)**
Erfinder: **Johnson, David**
**3401 SW Stonebrook Drive**
**Portland Oregon 97201(US)**
Erfinder: **Schirl, Werner**
**Königsberger Strasse 70**
**D-8500 Nürnberg(DE)**
Erfinder: **Tröndle, Hans-Peter, Dr.**
**Südhang 14**
**D-8550 Forchheim/Kersbach(DE)**

(54) **Taktstromversorgung.**

(57) Bei einer Taktstromversorgung für ein Computersystem (SW) sollen vier frequenz- und phasensynchrone Taktsignale erzeugt werden. Die Taktsignalerzeugung erfolgt mit Hilfe von vier PLL-Taktgebern (T1 bis T4). Damit auch dann, wenn einer der Taktgeber (T1 bis T4) gestört ist, die vier Taktsignale weiterbestehen, werden die Taktsignale der vier Taktgeber (T1 bis T4) an vier ($_4^3$)-Voter (V1 bis V4) geleitet, von deren Ausgängen dann die Taktsignale ausgehen. Da jeder Voter (V1 bis V4) eine gewisse Verzögerungszeit bedingt, welche die Frequenz der Taktsignale signifikant begrenzt, wird jedem der Voter (V1 bis V4) jeweils ein Verzögerungsglied (Z1 bis Z4) nachgeschaltet, dessen Verzögerungszeit summiert mit der Verzögerungszeit des zugehörigen Voters einem natürlichen Vielfachen der Periodendauer der vorgesehenen Taktfrequenz entspricht. Für die PLL-Regelung gibt der Ausgang des jeweiligen Verzögerungsgliedes (Z1 bis Z4) die Soll-Phasenlage und der Ausgang des jeweiligen Taktgebers (T1 bis T4) die Ist-Phasenlage vor.

FIG 1

## Taktstromversorgung

Die Erfindung bezieht sich auf eine Taktstromversorgung zur Erzeugung von n frequenz- und phasensynchronen Taktsignalen einer vorgegebenen Sollfrequenz für ein elektronisches Steuerwerk, insbesondere ein Computersystem, wobei n parallele phasenregelbare Taktgeber vorgesehen sind, deren Ausgänge mit jeweils einem Eingang von n zugeordneten $\binom{m}{n}$-Votern verbunden sind.

Eine derartige Taktstromversorgung ist beispielsweise aus der IEEE-Veröffentlichung von 1981 "Fault-Tolerant Clocking System" von T.Basil Smith bekannt. Die Phasenverschiebung der einzelnen Taktsignale zueinander darf bei derartigen Taktstromversorgungen jeweils nur einen geringen Bruchteil einer Taktperiode ausmachen. Dadurch wird die Höhe der Taktfrequenzen ganz entscheidend durch die von den Votern verursachten Zeitverzögerungen begrenzt.

Aufgabe der Erfindung ist es, eine Taktstromversorgung der eingangs genannten Art so auszubilden, daß mit relativ geringem Schaltungsaufwand sehr hohe Taktfrequenzen der synchronen Taktsignale erreicht werden können.

Gemäß der Erfindung wird diese Aufgabe dadurch gelöst, daß die möglichen Kombinationen der Eingangssignale zu Ausgangssignalen in jedem der Voter jeweils so über eine Kettung von logischen Schaltkreisen erfolgt, daß die gesamte Verzögerungszeit für jede der Kettungen jeweils einem vorgegebenen Sollwert entspricht, daß jedem der Voter jeweils ein erstes Verzögerungsglied nachgeschaltet ist, dessen vorgegebene Verzögerungszeit summiert mit der Verzögerungszeit des zugehörigen Voters einem natürlichen Vielfachen der Periodendauer der vorgegebenen Sollfrequenz entspricht und daß für die Phasenregelung der Taktgeber außer dem unmittelbaren Ausgangssignal des jeweiligen Taktgebers als Phasen-Istwert das Ausgangssignal des jeweils zugeordneten Verzögerungsglieds als Phasen-Sollwert vorgesehen ist. Bei der Erfindung wird dabei die Tatsache ausgenutzt, daß bei phasenregelbaren Taktgebern nur Abweichungen zwischen Phasen-Ist- und Phasen-Sollwerten detektiert werden, wobei die Phasenlagen innerhalb eines Zeitrasters im Periodentakt liegen können.

Eine erste vorteilhafte Ausbildung der Erfindung ist dadurch gekennzeichnet, daß für die korrespondierenden Schaltkreise der Kettungen jeweils logische Schaltkreise vorgesehen sind, die Elemente eines jeweils zugeordneten integrierten Schaltkreises sind. Zwar können die Gatterlaufzeiten (Verzögerungszeiten der einzelnen Schaltkreise) von integrierten Schaltungen, die aus verschiedenen Fertigungschargen stammen, sich erheblich voneinander unterscheiden, jedoch sind die Laufzeitdifferenzen der einzelnen Schaltkreise desselben integrierten Schaltkreises zueinander ausgesprochen gering. Somit sind die summierten Verzögerungszeiten sämtlicher Kettungen jeweils nahezu identisch.

Eine weitere vorteilhafte Ausbildung der Erfindung ist dadurch gekennzeichnet, daß jeder Taktgeber jeweils an seinem Ausgang ein taktflankengesteuertes Speicherglied aufweist. Dadurch wird in ausgesprochen einfacher Weise ein Puls-Pausen-Verhältnis von 1 : 1 für jedes der Taktsignale gewährleistet.

Eine weitere vorteilhafte Ausbildung der Erfindung ist dadurch gekennzeichnet, daß dem jeweils ersten Verzögerungsglied jeweils eine Reihenschaltung von Treiberelementen und weiteren Verzögerungsgliedern nachgeschaltet ist, wobei die Verzögerungszeit jedes der weiteren Verzögerungsglieder so gewählt ist, daß auch die Taktsignale an den Ausgängen der Reihenschaltungen phasensynchronisiert zueinander bleiben. Dadurch wird auch dann, wenn durch Treiberelemente zur Pegelanpassung und zur Verstärkung der Taktsignale eine gewisse Verzögerungszeit bedingt ist, eine eindeutige Frequenz- und Phasensynchronisierung der Kanäle zueinander sichergestellt.

Ein Ausführungsbeispiel der Erfindung ist in der Zeichnung dargestellt und wird im folgenden näher erläutert.

Dabei zeigen:

Fig. 1 ein Blockschaltbild einer vierkanaligen Taktstromversorgung,

Fig. 2 die Struktur eines $\binom{3}{4}$-Voters,

Fig. 3 eine für den $\binom{3}{4}$-Voter verwendbare Eingangsschaltung,

Fig. 4 Einzelheiten eines Taktgebers.

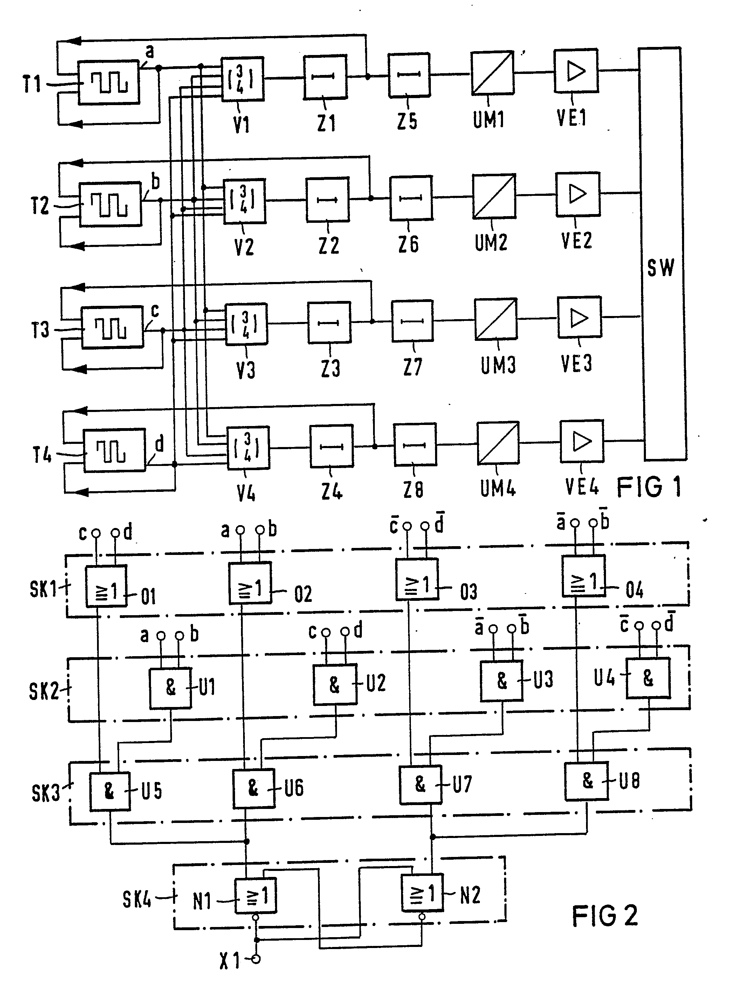

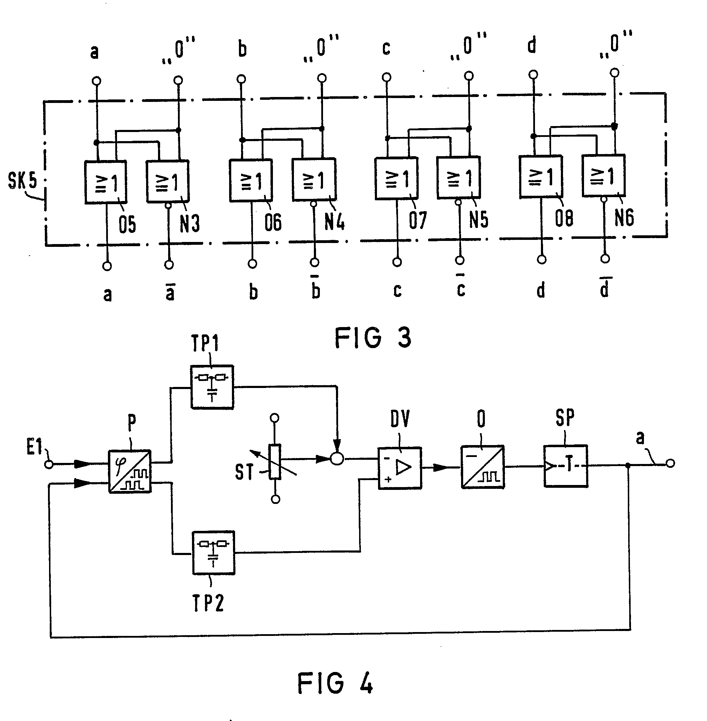

In der Darstellung gemäß Fig.1 ist eine Taktstromversorgung gezeigt, bei der vier frequenz- und phasensynchrone Taktsignale für ein Steuerwerk SW, z.B. ein Computersystem, erzeugt werden. Dazu sind vier phasenregelbare Taktgeber T1 bis T4 vorgesehen, deren Ausgangssignale a, b, c, und d jeweils an Voter V1 bis V4 geschaltet werden. Jeder der Voter V1 bis V4 ist als $\binom{3}{4}$-Voter ausgebildet, d.h. sofern eingangsseitig drei der vier Eingänge ein gleiches Signal führen, wird dieses Signal aufgrund einer Mehrheitsentscheidung als wirksames Signal an den Ausgang des jeweiligen Voters V1 bis V4 durchgeschaltet. Dazu weist jeder der Voter V1 bis V4 eine innere Logik auf, die im Zusammenhang mit den Figuren 2 und 3 noch im einzelnen erläutert wird. Es sei jedoch schon hier darauf hingewiesen, daß dabei von jedem der Voter V1 bis V4 eine vorgegebene Verzögerungszeit be-

dingt wird. Diese Verzögerungzeit wird für jeden der Voter V1 bis V4 jeweils mit Hilfe eines als Verzögerungsglied ausgebildeten Zeitgliedes Z1 bis Z4 so verlängert, daß die summierte Verzögerungszeit von Voter V1 und Zeitglied Z1 ein natürliches Vielfaches (1, 2, ..., N-faches) der Periodendauer des Taktsignals ausmacht. Für die Voter V2 bis V4 und die zugehörigen Zeitglieder Z2 bis Z4 gilt das entsprechende.

Die Phasenregelung der Taktgeber T1 bis T4 erfolgt dadurch, daß als Phasen-Istwert jeweils das Ausgangssignal des entsprechenden Taktgebers T1 bis T4 verwendet ist, während als jeweiliger Phasen-Sollwert das Ausgangssignal des zugehörigen Zeitgliedes Z1 bis Z4 verwendet ist. Damit liegt am Ausgang der Zeitglieder Z1 bis Z4 jeweils eines der vier zu erzeugenden Taktsignale der Taktstromversorgung vor, wobei die vier Taktsignale zueinander frequenz- und phasensynchron sind.

Wenn für das Steuerwerk SW Taktsignale gefordert sind, deren Pegel und deren Leistung von den Taktsignalen am Ausgang der ersten Zeitglieder Z1 bis Z4 abweicht, ist es erforderlich, jeden der ersten Zeitglieder Z1 bis Z4 einen als Pegelumsetzer dienenden Umsetzer UM1 bis UM4 nachzuschalten und die Signale der Umsetzer UM1 bis UM4 über Verstärker VE1 bis VE4 zu verstärken. Da die Umsetzer UM1 bis UM4 und die Verstärker VE1 bis VE4 jedoch bauartbedingte Verzögerungszeiten für die Taktsignale bedingen, ist es vorteilhaft, in den Kanal für jedes der Taktsignale jeweils ein weiteres Zeitglied Z5 bis Z8 zu schalten, wobei die Verzögerungszeit jedes der weiteren Zeitglieder Z5 bis Z8 so gewählt ist, daß auch die Taktsignale an den Ausgängen der Reihenschaltungen aus Zeitglied Z5 bis Z8, Umsetzer UM1 bis UM4 sowie Verstärker VE1 bis VE4 phasensynchronisiert zueinander bleiben.

In der Darstellung gemäß Fig.2 ist das Blockschaltbild eines der $(\frac{3}{4})$-Voter, im Ausführungsbeispiel des Voters V1 gezeigt. Als Eingangssignale werden dem Voter die Ausgangssignale a, b, c, und d der Taktgeber T1 bis T4 sowie deren inverse Signale $\bar{a}$, $\bar{b}$, $\bar{c}$, und $\bar{d}$ zugeführt. Auf die Erzeugung der inversen Signale $\bar{a}$, $\bar{b}$, $\bar{d}$ und $\bar{c}$ wird bei der Schilderung zu Fig.3 noch eingegangen.

Die Eingangssignale a bis d werden bei der vorliegenden $(\frac{3}{4})$-Auswahl so miteinander verknüpft, daß stets dann ein Signal logisch "1" an einem Ausgang X1 des Voters V1 vorliegt, wenn eine der folgenden Bedingungen erfüllt ist.

Die Eingangssignale a und b und c oder die Eingangssignale a und b und d oder die Eingangssignale a und c und d oder die Eingangssignale b und c und d weisen den Wert logisch "1" auf (Verknüpfungsregel I).

Am Ausgang X1 liegt ein Signal logisch "0" vor, wenn die Eingangssignale $\bar{a}$ und $\bar{b}$ und $\bar{c}$ oder Eingangssignale $\bar{a}$ und und $\bar{b}$ und $\bar{d}$ oder die Eingangssignale $\bar{a}$ und $\bar{c}$ und $\bar{d}$ oder die Eingangssignale $\bar{b}$ und $\bar{c}$ und $\bar{d}$ den Wert logisch "1" aufweisen (Verknüpfungsregel II).

Dazu werden die Eingangssignale c und d einem ODER-Glied O1, die Eingangssignale a und b einem ODER-Glied O2, die Eingangssignale $\bar{c}$, $\bar{d}$ einem ODER-Glied O3 und die Eingangssignale $\bar{a}$ und $\bar{b}$ einem ODER-Glied O4 zugeführt. Diese ODER-Glieder O1 bis O4 sind Elemente eines integrierten Schaltkreises SK1, wie dies in der Darstellung durch eine gestrichelte Linie angedeutet ist. Die Eingangssignale a und b werden ferner einem UND-Glied U1 zugeführt, die Eingangssignale c und d einem UND-Glied U2, die Eingangssignale $\bar{a}$ und $\bar{b}$ einem UND-Glied U3 und die Eingangssignale $\bar{c}$ und $\bar{d}$ einem UND-Glied U4. Die UND-Glieder U1 bis U4 sind Elemente eines integrierten Schaltkreises SK2 (ebenfalls gestrichelt angedeutet). Die Ausgangssignale des ODER-Gliedes O1 und des UND-Gliedes U1 werden in einem UND-Glied U5 miteinander verknüpft, die Ausgangssignale des ODER-Gliedes O2 und des UND-Gliedes U2 werden in einem UND-Glied U6 miteinander verknüpft, die Ausgangssignale des ODER-Gliedes O3 und des UND-Gliedes U3 werden in einem UND-Glied U7 miteinander verknüpft und die Ausgangssignale des ODER-Gliedes O4 des UND-Gliedes U4 werden in einem UND-Glied U8 miteinander verknüpft. Die UND-Glieder U5 bis U8 sind Elemente eines integrierten Schaltkreises SK3, wie auch dies auch hierbei durch eine gestrichelte Linie angedeutet ist. Die UND-Glieder U5 und U6 sind ausgangsseitig miteinander verbunden; ebenso sind die Ausgänge der UND-Glieder U7 und U8 miteinander verbunden. Am Ausgang der UND-Glieder U5 und U6 ist damit die eingangs geschilderte erste Bedingung (Verknüpfungsregel I) erfüllt. Am Ausgang der UND-Glieder U7 und U8 ist die Verknüpfungsregel II in inverser Form erfüllt, d.h. als Ausgangssignal liegt bei den geschilderten Eingangssignalen ein Wert logisch "1" vor.

Die Ausgangssignale logisch "1" der UND-Glieder U5 und U6 stellen ein Setzsignal für einen bistabilen Speicher dar, der aus zwei NOR-Gliedern N1 und N2 besteht, die Elemente eines integrierten Schaltkreises SK4 sind (gestrichelt angedeutet). Die Ausgangssignale logisch "1" der UND-Glieder U7 und U8 stellen dessen Rücksetzsignal dar. Das Ausgangssignal der UND-Glieder U5 und U6 ist dazu an einen ersten Eingang des NOR-Gliedes N1 geführt, das Ausgangssignal der UND-Glieder U7 und U8 ist an einen ersten Eingang des NOR-Gliedes N2 geführt. Der Ausgang des NOR-Gliedes N1 ist auf einen zweiten Eingang des NOR-Gliedes N2 rückgekoppelt, der Ausgang des NOR-Gliedes N2 ist auf einen zweiten Eingang des NOR-Gliedes N1 rückgekoppelt. Das Ausgangssignal des Voters V1 kann dem Ausgang des NOR-Gliedes N1 entnommen werden. Die Korrespondenz des Ausgangssignals am Ausgang X1 mit einem Wert logisch "1" am Ausgang der UND-Glieder U5 und U6 stellt die Verknüpfungsregel I sicher. Da das Ausgangssignal der UND-Glieder U7 und U8 bei einem Wert logisch "1" den bistabilen Speicher auf einen Wert logisch "0" rücksetzt, wird die Verknüpfungsregel II für das Ausgangssignal am Ausgang X1 erfüllt.

Die Schaltung gemäß Fig.2 ermöglicht, daß immer dann, wenn drei beliebige der vier Taktsignale den Wert logisch "0" aufweisen, auch am Ausgang X1 ein Wert logisch "0" vorliegt und immer dann, wenn drei der vier Taktsignale a bis d den Wert logisch "1" einnehmen, auch am Ausgang X1 der Wert logisch "1" vorliegt. Ein Ausfall eines der Taktgeber T1 bis T4 führt dabei zu keiner Störung, und ein defekter Taktgeber T1 bis T4 kann auch während des Betriebs der Taktstromversorgung ausgetauscht werden.

Die Tatsache, daß bei allen möglichen Kombinationen der Eingangssignale zu Ausgangssignalen jeweils gleiche Elemente von integrierten Schaltkreisen SK1 bis SK4 durchlaufen werden, führt dazu, daß in jedem Fall für die Verzögerungszeit des Voters ein gleicher vorgegebener Sollwert erreicht wird.

In der Darstellung gemäß Fig.3 ist eine Eingangsschaltung für den Voter gemäß Fig.2 gezeigt, bei der aus den Ausgangssignalen a bis d der Taktgeber T1 bis T4 inverse Signale $\bar{a}$ bis $\bar{c}$ gebildet werden. Um die durch diesen Vorgang bedingte Verzögerungszeit wird dabei in gleicher Weise auch jedes der nicht invertierten Taktsignale a bis d verzögert. Dazu sind auf einem integrierten Schaltkreis SK5 ODER-Glieder O5 bis O8 sowie NOR-Glieder N3 bis N6 vorgesehen. Das ODER-Glied O5 und das NOR-Glied N3 bzw. das ODER-Glied O6 und das NOR-Glied N4 bzw. das ODER-Glied O7 und das NOR-Glied N5 bzw. das ODER-Glied O8 und das NOR-Glied N6 sind dabei in der Schaltung als ein Schaltkreis mit gleicher Verzögerungszeit sowohl für die ODER- als auch für die NOR-Verknüpfung ausgebildet. Jeweils dem ersten Eingang des ODER-Gliedes O5 und des NOR-Gliedes N3 bzw. des ODER-Gliedes O6 und des NOR-Gliedes N4 bzw. des ODER-Gliedes O7 und des NOR-Gliedes N5 bzw. des ODER-Gliedes O8 und des NOR-Gliedes N6 wird das nicht invertierte Taktsignal a, b, c bzw. d zugeführt. Der jeweils zweite Eingang der ODER-Glieder O5 bis O8 und der NOR-Glieder N3 bis N6 wird permanent mit einem Signal logisch "0" beauf schlagt. Dadurch liegt an den Ausgängen der ODER-Glieder O5 bis O8 das jeweils nicht invertierte Taktsignal der Taktgeber T1 bis T4 vor, während an den Ausgängen der NOR-Glieder N3 bis N6 das jeweils invertierte Taktsignal $\bar{a}$ bis $\bar{d}$ der Taktgeber T1 bis T4 ansteht. Eben diese Ausgangssignale der Schaltung gemäß Fig.3 können als Eingangssignale für die Schaltung nach Fig.2 verwendet werden.

In der Darstellung gemäß Fig.4 wird die Funktionsweise der Taktgeber, z.B. des Taktgebers T1, dargelegt. Der Taktgeber T1 beinhaltet als Schwingungserzeuger einen spannungsgesteuerten Oszillator O dessen Ausgangssignal einem taktflankengesteuerten Speicherglied SP zugeleitet wird. Das taktflankengesteuerte Speicherglied SP stellt sicher, daß das vom Oszillator O gelieferte Signal in das Taktsignal a umgeformt wird, das mit Sicherheit ein Puls-Pausen-Verhältnis 1 : 1 aufweist.

Die Steuerspannung für den Oszillator O wird folgendermaßen erzeugt. Das am Ausgang des Speichergliedes SP vorliegende Taktsignal wird als Signal für den Phasen Istwert dem ersten Eingang eines Phasen-Detektors P zugleitet, dem ferner das Ausgangssignal des zugeordneten Voters, in diesem Fall des Voters V1, über einen Eingang E1 als Phasen-Sollwert zugeleitet wird.

Der Phasendetektor P ist so ausgebildet, daß über einen ersten Ausgang an einen Tiefpaß TP1 ein erstes Steuersignal geliefert wird, wenn die Ist-Phase der Soll-Phase nacheilt und daß über einen zweiten Ausgang an einen Tiefpaß TP2 ein Steuersignal geleitet wird, wenn die Ist-Phase der Soll-Phase voreilt. Die Steuersignale weisen eine Grundfrequenz auf, die der Frequenz am Ausgang des Speichergliedes SP entspricht, wobei das Puls-Pausen-Verhältnis dieser Steuersignale jeweils ein Maß für die Größe der Phasenabweichung darstellt. Eine betragsmäßig kleine Phasenabweichung führt zu einem kleinen Puls-Pausen-Verhältnis und eine betragsmäßig große Phasenabweichung führt zu einem großen Puls-Pausen-Verhältnis.

Der Tiefpaß TP1 bzw. der Tiefpaß TP2 liefern an ihrem jeweiligen Ausgang eine den Gleichanteil des ersten bzw. zweiten Steuersignals angebende Steuerspannung. Am Ausgang des Tiefpasses TP1 liegt also eine analoge Steuerspannung vor, deren Größe proportional dem detektierten Phasenversatz bei nacheilender Ist-Phase entspricht.

Die Steuerspannung am Ausgang des Tiefpasses TP1 wird additiv mit einer von einem Stellglied ST vorgegebenen Spannung überlagert, wobei das Stellglied dementsprechend die Grundfrequenz des Oszillators O bestimmt. Das überlagerte Signal wird dem invertierenden Eingang eines proportional wirkenden Differenzverstärkers DV zugeleitet, dessen nicht invertierender Eingang mit dem Ausgang des Tiefpasses TP2 verbunden ist. Im Idealfall,d.h.bei einer Phasenabweichung "Null", wird das Ausgangssignal des Differenzverstärkers DV allein durch die vom Stellglied ST, beispielsweise über einen Spannungsteiler, vorgegebenen Steuerspannung bestimmt. Abweichungen von diesem Idealfall variieren die Ausgangsspannung des Differenzverstärkers DV und regeln damit die Frequenz des Oszillators O.

## Ansprüche

1. Taktstromversorgung zur Erzeugung von n frequenz- und phasensynchronen Taktsignalen einer vorgegebenen Sollfrequenz für ein elektronisches Steuerwerk, insbesondere ein Computersystem, wobei n parallele phasenregelbare Taktgeber vorgesehen sind, deren Ausgänge mit jeweils einem Eingang von n zugeordneten $\binom{m}{n}$-Votern verbunden sind,**dadurch gekennzeichnet,** daß die möglichen Kombinationen der Eingangssignale zu Ausgangssignalen in jedem der Voter (V1 bis V4) jeweils so über eine Kettung von logischen Schaltkreisen (O1-O8, U1-U8 und N1-N6) erfolgt, daß die gesamte Verzögerungszeit für jede der Kettungen jeweils einem vorgegebenen Sollwert entspricht, daß jedem der Voter (V1 bis V4) jeweils ein erstes Verzögerungsglied (Z1 bis Z4) nachgeschaltet ist, dessen vorgegebene Verzögerungszeit summiert mit der Verzögerungszeit des zugehörigen Voters (V1 bis V4) einem natürlichen Vielfachen der Periodendauer der vorgegebenen Sollfrequenz entspricht und daß für die Phasenregelung der Taktgeber (T1 bis T4) außer dem unmittelbaren Ausgangssignal des jeweiligen Taktgebers (T1 bis T4) als Phasen-Istwert das Ausgangssignal des jeweils zugeordneten ersten Verzögerungsglieds (Z1 bis Z4) als Phasen-Sollwert vorgesehen ist.

2. Taktstromversorgung nach Anspruch 1, **dadurch gekennzeichnet,** daß für die korrespondierenden Schaltkreise der Kettungen jeweils logische Schaltkreise vorgesehen sind, die Elemente eines jeweils zugeordneten integrierten Schaltkreises (SK1 bis SK5) sind.

3. Taktstromversorgung nach Anspruch 1 oder 2, **dadurch gekennzeichnet,** daß jeder Taktgeber (T1 bis T4) jeweils an seinem Ausgang ein taktflankengesteuertes Speicherglied (SP) aufweist.

4. Taktstromversorgung nach einem der vorstehenden Ansprüche, **dadurch gekennzeichnet,** daß dem jeweils ersten Verzögerungsglied (Z1 bis Z4) jeweils eine Reihenschaltung von Treiberelementen (UM1-UM4, VE1-VE4) und weiteren Verzögerungsgliedern (Z5 bis Z8) nachgeschaltet ist, wobei die Verzögerungszeit jedes der weiteren Verzögerungsglieder (Z5 bis Z8) so gewählt ist, daß auch die Taktsignale an den Ausgängen der Reihenschaltungen phasensynchronisiert zueinander bleiben.

EP 0 303 916 A2

FIG 1

FIG 2

FIG 3

FIG 4